# EUROPÄISCHE PATENTSCHRIFT

(11) **EP 2 975 329 B1**
(45) Veröffentlichungstag und Bekanntmachung des Hinweises auf die Patenterteilung: **31.10.2018**
(21) Anmeldenummer: 15176610.2
(22) Anmeldetag: 14.07.2015
(51) Int. Cl.: F24D 3/16, E04F 13/08, E04C 2/52

(54) **STRAHLFLÄCHENAUFBAU UND VERFAHREN ZU SEINER HERSTELLUNG**
RADIATING SURFACE STRUCTURE AND METHOD FOR PRODUCING THE SAME
STRUCTURE DE SURFACES RAYONNANTES ET SON PROCEDE DE FABRICATION

(30) Priorität: 17.07.2014 DE 102014110070
(43) Veröffentlichungstag der Anmeldung: 20.01.2016
(73) Patentinhaber: Frenger Systemen BV Heiz- und Kühltechnik GmbH, 64823 Gross-Umstadt (DE)
(72) Erfinder: MENGE, Klaus, 64823 Groß-Umstadt (DE)
(74) Vertreter: Leske, Thomas

(56) Entgegenhaltungen:
- BE-A- 494 005
- DE-U1-202004 013 206
- FR-A1- 2 217 655

## Beschreibung

Die Erfindung betrifft einen Strahlflächenaufbau zum Temperieren eines Raumes, insbesondere von Produktions-, Lager-, Sport- und Ausstellungshallen, mit wenigstens einer Decken-strahlplatte mit einem oder mehreren von einem Wärme- und/oder Kälteübertragungsmedium durchströmten Rohren eines Rohrregisters, mit wenigstens einer Strahlplatte, welche in Einbaulage dem zu temperierenden Raum zugewandt ist, und Seitenwandelementen, zwischen denen das Rohrregister angeordnet ist, wobei wenigstens ein Seitenbauelement in Einbaulage einen vertikal nach oben verlaufenden Seitenabschnitt aufweist.

Ein solcher Strahlflächenaufbau gemäß dem Oberbegriff des Anspruchs 1 ist aus dem Gebrauchsmuster DE202004013206U1 bekannt. Ein derartiger Strahlflächenaufbau ist bspw. aus der DE 20 2009 017 997 U1 bekannt. Der dort beschriebene Aufbau umfasst eine Deckenstrahlplatte, die mehrere Rohre aufweist, die in einer Ebene liegend zu einem Rohrregister zusammengefasst sind. Auf der dem zu temperierenden Raum zugewandten Seite der Rohre sind Strahlplatten aus Blech angeordnet, die die Wärme an die Umgebung abstrahlen. An der seitlichen unteren Kante der äußeren seitlichen Strahlplatten sind Seitenwandelemente vorgesehen, die sich im Wesentlichen vertikal nach oben erstrecken. An der Außenseite der Seitenwandelemente ist jeweils eine nach unten weisende Schürze angeordnet, die einen Stauraumausbildet. Zwischen den Seitenwandelementen ist eine Dämmschicht vorgesehen.

Eine vergleichbare Anordnung ist in der DE 20 2004 013 206 U1 beschrieben. Die seitlichen Strahlplatten, die von den äußeren Rohren abgehen, bilden einen Staurand, der sich gegenüber der Horizontalen nach unten erstreckt. Die Strahlplatten sind auch als Seitenwandelemente ausgebildet. An die untere Kante der Strahlplatten anschließend erstreckt sich die Strahlplatte in einen vertikal nach oben verlaufenden Seitenwandabschnitt. Auf der dem zu temperierenden Raum abgewandten Seite der Rohre und der Strahlplatten ist eine Wärmedämmung angeordnet, die die Wärmeabstrahlung der Rohre und der Strahlplatten in die Decke verhindert. Die Seitenelemente bilden einen Sichtschutz, der die Wärmedämmung verkleidet.

Die DE 32 17 948 C2 beschreibt eine Strahlungsheizung mit unter der Decke abgestützten Rohrbündeln. Die Rohre sind unterhalb eines Lüftungskanals angeordnet und dem zu temperierenden Raum zugewandt. Im Bereich der Unterseite des Lüftungskanals sind beidseitig doppelwandige Blenden vorgesehen, deren Wandungen eine Isolierung umschließen. Problematisch dabei ist jedoch, dass die Wandung die Abstrahlung von Wärme in die seitlichen Bereiche nicht gänzlich unterbinden kann. Hinzu kommt, dass es im Bereich der Wandung zu einer starken Reflexion des Schalls kommt, was in der Regel nicht erwünscht ist. Ein vergleichbarer Aufbau ist in der DE 43 26 009 C1 beschrieben.

Die Seitenpaneele bzw. Seitenwandelemente der Deckenstrahlplatten stellen den Installateur aus thermischer und akustischer Sicht vor Herausforderungen. Die Seitenelemente weisen den Nachteil auf, dass ein Teil der zur Verfügung gestellten Energie über die Seitenteile überwiegend in Form von Konvektion abgegeben wird. Infolge dessen steht diese Energie zur gewünschten Erwärmung der sich im Raum befindenden Personen oder Objekte nicht zur Verfügung. Lediglich die Strahlungsenergie, die direkt nach unten abgegeben wird, wird dort direkt in Wärmeenergie umgewandelt. Um diesem Effekt entgegenzuwirken, ist bspw. aus der DE 20 2010 015 535 U1 bekannt, die Seitenteile von der nach unten gerichteten Strahlplatte thermisch zu entkoppeln, so dass der Transfer der Wärme in die Seitenteile reduziert wird. Alternativ kann man auch das Seitenteil komplett weglassen, so dass eine oberhalb der Strahlplatte angeordnete Dämmschicht zur Seite hin offen ist. Die erste Variante hat den Nachteil, dass sowohl Produktion als auch Montage des Strahlflächenaufbaus zusätzliche Aufwendungen erfordern. Insbesondere die thermische Entkopplung ist aufwendig. Das Seitenteil entfallen zu lassen, ist angesichts der Anwendungsbereiche solcher Deckenstrahlplatten weder vorteilhaft noch wünschenswert. Der Entfall des vollständigen Seitenelements stellt keine praktikable Lösung dar, insbesondere weil ein solches Vorgehen nicht konform mit der Normenreihe DIN EN 14 0 37 geht und weil die Ballwurfsicherheit der Deckenstrahlplatte gesetzlichen Forderungen unterliegt. Ist kein stabiles abschließendes Metallteil oder Seitenwandelement vorhanden, können Objekte, z.B. Bälle, die die offene Dämmung treffen, diese verschieben, beschädigen oder gar nach unten fallen lassen. Auch die das Wärmemedium führenden Rohre sind gefährdet. Wird als Wärmedämmung beispielsweise Polyethylenschaum verwendet, können bei fortgesetztem Ballbeschuss Partikel freigesetzt und in die Luft der Halle abgegeben werden.

Eine andere aus dem Stand der Technik bekannte Maßnahme sieht eine thermische Entkopplung des kompletten Seitenteils bereits ab dem erwärmten Rohr vor, um die Verlustleistungen zu reduzieren. Dies ist jedoch nachteilig, weil bei der thermischen Entkopplung ab dem Rohr eine waagerechte Strahlfläche verloren geht und somit die Deckenstrahlplatte bzw. der Strahlflächenaufbau zur Einbringung der geforderten Heizlast größer werden muss. Dies führt aber zu Konflikten mit anderen Bauteilen im Dachbereich, wie bspw. Lautsprechen, der Beleuchtung, Sportgeräten oder dergleichen, die eine Verbreiterung nicht zulassen. Außerdem ist diese Maßnahme nur bei neu produzierten Deckenstrahlplatten möglich, und die nachträgliche thermische Entkopplung als Umbau- oder Nachrüstmaßnahme bei einem bereits installierten Strahlflächenaufbau ist praktisch ausgeschlossen, weil hierzu das gesamte System abgehängt und mit erheblichem Aufwand modifiziert werden müsste.

Es ist Aufgabe der vorliegenden Erfindung, einen Strahlflächenaufbau der eingangs genannten Art bereitzustellen, der den Anteil der abgegebenen Strahlungswärme in den zu temperierenden Raum erhöht, indem die Verlustleistung an den Seitenwandelementen minimiert wird. Gleichzeitig soll ein robuster, einfacher und kosteneffizienter Aufbau realisiert soll, so dass Umrüstarbeiten einfach und ohne konstruktive oder materielle Anpassung der verwendeten Materialien möglich sind. Ferner soll eine Möglichkeit geschaffen werden, bereits montierte bzw. sich im Betrieb befindliche Deckenstrahlplatten bzw. Strahlflächenaufbauten ohne viel Aufwand umzurüsten und effizienter zu machen. Damit verbunden soll eine Lösung vorgeschlagen werden, mit der die Schallreflexionen minimiert werden.

Diese Aufgabe wird dadurch gelöst, dass der Seitenwandabschnitt zumindest abschnittsweise auf der dem Rohrregister abgewandten Seite eine Beschichtung aus thermisch isolierendem und schallabsorbierendem Material aufweist, und dass die Beschichtung zu der dem Rohrregister abgewandten Seite hin offen ist. So kann z.B. eine an der Außenseite des Seitenabschnitts angebrachte Wärme- und Schalldämmung und/oder Wärme- und Schallisolierung dafür sorgen, dass der Energieanteil, der durch seitliches Entweichen aus der Deckenstrahlplatte verloren geht, vermindert wird, während gleichzeitig die Reflexion des Schalls reduziert wird. Bestehende Systeme bedürfen dabei keiner umfangreichen konstruktiven Veränderungen. Auch die Fertigung der Decken-strahlplatte ist vereinfacht, weil das dämmende Material im Nachgang der Produktion einfach auf das vorhandene senkrechte Seitenteil aufgebracht werden kann. Dies lässt auch eine einfache Variation des Materials zu, je nachdem welche Anforderungen der Nutzer vorgibt.

Offen bedeutet in diesem Zusammenhang, dass die Beschichtung an der Außenseite, insbesondere an der seitlichen Außenseite des Strahlflächenaufbaus, der die Seitenwandelemente, die Strahlplatten und das Rohregister umfasst, angebracht ist. In Folge dessen ist die Beschichtung in Einbaulagen in einer horizontalen Richtung unterhalb der Decke zur Außenseite des Strahlenflächen-aufbaus hin nicht durch ein anderes Element des Strahlenflächenaufbaus, wie eine Schürze, einen Ballabweiser oder dergleichen verdeckt sondern insbesondere in horizontaler Richtung exponiert ist bzw. frei liegt. Das verhindert, dass insbesondere die schalldämmende Wirkung der Beschichtung an der Außenseite nicht beeinträchtigt wird.

Die Beschichtung kann aus einem oder mehreren Materialien oder Komponenten bestehen, die sich zu einer Beschichtung zusammenfügen oder zusammengefügt sind. Selbstverständlich kann die Beschichtung im Sinne der Erfindung auch mehre Schichten aus thermisch isolierendem und schallisolierendem Material aufweisen und/oder umfassen. Erfindungsgemäß können unterschiedliche Schichten, auch mit unterschiedlichen Eigenschaften verwendet werden. Das kann auch Schichten beinhalten, die nicht unmittelbar eine schall- und/oder thermisch isolierende Wirkung aufweisen, sondern z.B. einen Schutz vor Feuchtigkeit, Beschädigung oder dergleichen bereitstellen.

Der Seitenwandabschnitt kennzeichnet sich vor allem dadurch aus, dass er in Einbaulage zur Decke hin verläuft und die Rohre in der Horizontalen vorzugsweise vollständig verdeckt, sich also in Einbaulage zumindest bis oberhalb der Rohre erstecken kann. Auch kann sich der Seitenwandabschnitt dadurch auszeichnen, dass seine Außenseite im Wesentlichen vom zu temperierenden Raum hoch, insbesondere vertikal zur Decke verläuft und/oder dass der Seitenwandabschnitt nicht als zu dem temperierenden Raum hin ausgerichtete Strahlenplatte vorgesehen ist. Vor allem kann der Seitenwandabschnitt sich dadurch auszeichnen, dass er den Strahlflächenaufbau, bzw. den Innenraum des Strahlflächenaufbaus seitlich abschließt, wenn die Beschichtung noch nicht aufgebracht ist.

Durch die vorteilhafte Kombination von Seitenwandelement und nach außen hin offener bzw. exponierter thermischer Isolierung und Schallisolierung bzw. thermischer Dämmung und Schalldämmung weist der Strahlflächenaufbau auch einen effizienten Schutz vor Beschädigungen auf. Erfindungsgemäß sind die Rohre bzw. das Rohrregister in Einbaulage so angeordnet, dass sie zwischen den Seitenwandabschnitten liegen.

Erfindungsgemäß weist das Seitenwandelement einen zu einem Rohr, insbesondere einem seitlichen äußeren Rohr des Rohrregisters hin verlaufenden Abschnitt auf, der als Strahlplatte ausgebildet ist. Idealerweise erstreckt sich der Seitenwand-abschnitt, der die Beschichtung aufweist, bis zu dem Abschnitt, an dem das Seitenelement zum Rohr des Rohrregisters hin abknickt. Der als Strahlplatte ausgebildete Abschnitt des Seitenwandelements ist in Einbaulage so angeordnet sein, dass seine Strahlenfläche, die in den zu temperierenden Raum gerichtet ist, keine Beschichtung aufweist.

In Weiterbildung des Erfindungsgedankens können das Seitenwandelement und/oder der Seitenwandabschnitt thermisch, vorzugsweise direkt, an ein Rohr des Rohrregisters gekoppelt sein. Vorzugsweise geschieht dies über den zum Rohr des Rohrregisters hin verlaufenden Abschnitt des Seitenwandelements. Das Rohr kann durch alle dem Fachmann bekannte Verfahren an die Strahlplatte gekoppelt sein, bspw. durch Schweißen, Löten, Schrauben, Heften, Falzen, Klemmen etc.. Auch kann die Strahlplatte einen oder mehrere Abschnitte zum Aufnehmen bzw. Einlegen des Rohres vorweisen, so dass das Rohr in Wärme und/oder Kälte übertragendem Kontakt mit der Strahlplatte steht. Im Gegensatz zu bekannten Maßnahmen, die eine Entkopplung des Seitenteils vorsehen, kann auch mit dieser Lösung auf bestehende Systeme zurückgegriffen werden. Das Seitenwandelement wird nicht thermisch entkoppelt, sondern lediglich am Seitenabschnitt außenseitig thermisch und zusätzlich akustisch gedämmt. Dabei muss auf die Strahlungsheizfläche des Abschnitts des Seitenwandelements, der als Strahlplatte verwendet wird, nicht verzichtet werden, da dessen vollständige Fläche bis zu dem Rand, an dem das Seitenwandelement in den Seitenwand-abschnitt übergeht, vollständig genutzt wird. So wird zum einen die Verlustleistung an den senkrechen Seitenflächen effizient minimiert, gleichzeitig wird die schallabsorbierende Wirkung der Deckenstrahlplatte deutlich gesteigert. Auf diese Weise werden zwei Problemstellung, nämlich die Verlustleistung und die Schallreflexion Das hat auch zur Folge, dass die Heizfläche der gesamten Deckenstrahlplatte nicht vergrößert werden muss, da auch das an das Rohr angeschlossene Seitenwandelement als Heizelement genutzt wird. Zudem liefert dies einen stabilen seitlichen Schutz.

Vorteilhafterweise ist das Seitenwandelement einstückig ausgebildet, so dass es den Seitenwandabschnitt und den als Strahlplatte ausgebildete Abschnittausbildet. Dies kann durch Umkanten oder bspw. Umbördeln eines geeigneten Werkstoffs geschehen. Grundsätzlich kann das Seitenwandelement aus Metall, z.B. Blech, bestehen.

Die Erfindung sieht eine Wärmedämmung vor, die sich in Einbaulage zumindest bis oberhalb der Rohre erstreckt. Diese verhindert den Wärmeübergang von den Rohren bzw. der Deckenstrahlplatte in die Decke, so dass die Abstrahlung in den Raum auf hohem Niveau bleibt. Durch die Seitenwandelemente wird die Wärmedämmung effizient vor mechanischer Beschädigung geschützt. Eine auf der dem zu temperierenden Raum abgewandten Seite des Rohrregisters platzierte Dämmschicht reduziert effizient den Wärmeverlust der Deckenstrahlplatte. Dabei erweist es sich als vorteilhaft, wenn der Seitenwandabschnitt in Einbaulage einen Sichtschutz für die Wärmedämmung und/oder eine Halterung ausbildet. So kann der Seitenwandabschnitt bzw. das Seitenwandelement als Halterung für Wand oder Decke ausgebildet sein und z.B. Halterungen für Gewindestangen, Anhängeketten, Bleche, Seile, Verschraubungen oder andere dem Fachmann bekannte Befestigungssysteme vorweisen.

Als besonders vorteilhaft für den Produktionsprozess aber auch vor allem für das Nach- bzw. Umrüsten bestehender, installierter Systeme erweist sich das Aufkleben der Beschichtung auf den Seitenwandabschnitt des Seitenwandelements. Vorzugsweise wird hierzu doppelseitiges Klebeband verwendet, was die Installation vereinfacht. Durch die Anordnung der Beschichtung auf der freien Außenseite des Seitenwandelements kann die für den gewünschten Anwendungszweck passende Beschichtung ausgewählt und aufgeklebt werden. Ein neu produzierter Strahlenflächenaufbau kann zusammenmontiert, mit der Beschichtung versehen und anschließend aufgehängt werden. Je nach Bedarf kann die Beschichtung auch nach der Installation aufgebracht werden. Bei einem bereits an der Decke installierten System kann die Beschichtung einfach auf die Seite aufgebracht werden.

Grundsätzlich kann die Beschichtung auch lösbar an dem Seitenwandabschnitt angebracht sein.

Als Beschichtung kommt insbesondere eine wärmeisolierende und schallabsorbierende Dämmung in Betracht. Als geeignet erweist sich beispielsweise das Kaiflex KKplus s2-System von der Firma Kaimann GmbH in Hövelhof, Deutschland. Dieses bezeichnet einen hochflexiblen Schaumstoff auf Basis synthetischen Kautschuks, ein sogenannter Flexible Elastomeric Foam, der beispielsweise eine Wärmeleitfähigkeit von ≤ 0,035 W/(m·K) bei 20° C aufweist. Andere geeignete Materialien umfassen ein Vlies. In der DE 94 08 097 U1 ist beispielsweise eine Dämmung beschrieben, die schalldämmend und thermisch dämmend wirkt. Andere geeignete Materialien umfassen einen Polyurethan-Schaumstoff z.B. mit einer aluminiumbedampften Polyethylen(PE)-Folie, bekannt unter der Bezeichnung M 1579 der Firma Steinbach AG in Detmold, Deutschland. Vom gleichen Hersteller wird auch unter der Bezeichnung M 1761 eine Glasfasermatte mit einer einseitig gelochten Aluminiumfolie angeboten, die für die Schall- und Wärmeisolation geeignet ist.

Der als Strahlplatte ausgebildete Abschnitt des Seitenwandelements bildet in Einbaulage einen nach unten weisenden Staurand aus. Es erweist sich dabei als vorteilhaft, wenn das Seitenwandelement an einem in Einbaulage tiefsten Punkt des Seitenwandabschnitts zum Rohr hin abknickt. Der Stauraum verhindert effizient ein Entweichen von temperierter Luft über den Seitenabschnitt des Strahlflächenaufbaus in den Deckenbereich. Grundsätzlich kann sich der Seitenwandabschnitt in Einbaulage bis unterhalb zumindest eines Rohres des Rohrregisters erstrecken, so dass ein effizienter seitlicher Schutz für das Rohrregister erzielt wird, während gleichzeitig sichergestellt ist, dass die Wärmeleistung über die Strahlplatte abgegeben wird.

Die der Erfindung zugrunde liegende Aufgabe wird ferner durch ein Herstellverfahren bzw. durch ein Verfahren zum Umrüsten bzw. Nachrüsten eines Strahlflächenaufbaus gelöst, wobei das Verfahren das zumindest abschnittsweise Aufbringen bzw. Befestigen, vorzugsweise Kleben, einer Beschichtung aus thermisch isolierendem und schallabsorbierenden Material auf der dem Rohrregister abgewandten Seite des Seitenwandabschnitts vorsieht, so dass die Beschichtung in Einbaulage zu der dem Rohrregister abgewandten Seite hin offen ist. Das erfindungsgemäße Verfahren eignet sich nicht nur für neu produzierte Strahlenflächenaufbauten. Das Umrüsten bestehender System ist erheblich vereinfacht. Anstatt die Decken-strahlplatte bzw. den Strahlenflächenaufbau zu demontieren, müssen lediglich die Seitenteile und/oder die Seitenwandabschnitte mit der Beschichtung versehen, vorzugsweise verklebt werden. Dazu können die Seitenteile abgenommen werden, letztlich ist dies aber nicht notwendig, weil das Anbringen der Beschichtung auch direkt am Installationsort durchgeführt werden kann, wenn der Strahlflächenaufbau an der Decke angebracht ist. Dazu ist lediglich die Beschichtung außenseitig auf den Strahlflächenaufbau aufzubringen. Dieses Vorgehen bedarf nicht einmal der Deinstallation des Strahlenflächenaufbaus oder einer Komponenten, wie den Seitenwandelementen. Das Umrüstverfahren bedarf daher wenig Zeit und bietet eine Effizienzverbesserung, die mit geringen Kosten verbunden ist.

Weiterbildungen, Vorteile und Anwendungsmöglichkeiten der Erfindung ergeben sich auch aus der nachfolgenden Beschreibung eines Ausführungsbeispiels und den Zeichnungen.

Es zeigen:
- Fig. 1: in perspektivischer Ansicht den erfindungsgemäßen Strahlflächenaufbau nach einer ersten Ausführungsform der Erfindung; und
- Fig. 2: eine Schnittdarstellung des Strahlflächenaufbaus nach Figur 1.

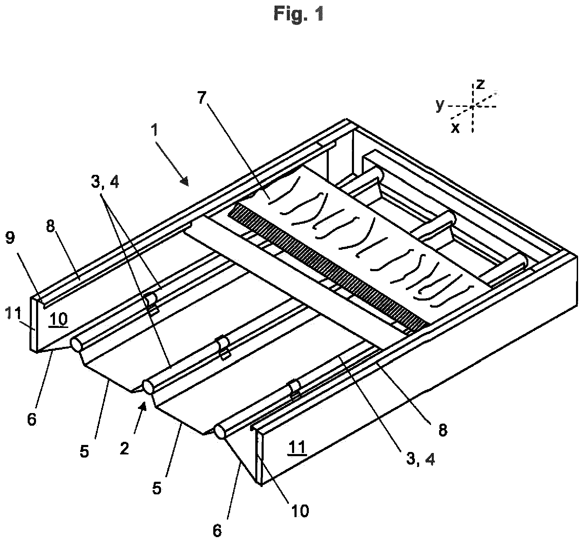

Fig. 1 zeigt einen Strahlflächenaufbau 1 mit einer Deckenstrahlplatte 2, die mehrere Rohre 3 aufweist, die im Wesentlichen in einer Ebene liegend zu einem Rohrregister 4 zusammengefasst sind. Die Rohre 3 sind auf der dem zu temperierenden Raum (dieser liegt in Figur 1 unterhalb des Strahlflächenaufbaus 1) abgewandten Seite von Strahlplatten 5, 6 aus Blech angeordnet. Diese gliedern sich in innere Strahlplatten 5 und zum Rand hin gelegene Strahlplatten 6.

Die Unterseite der Strahlplatten 5, 6 dient dazu, Wärme an die Umgebung abzustrahlen. Die äußeren seitlichen Strahlplatten 6 erstrecken sich ausgehend von den beiden äußeren Rohren 3 im Wesentlichen durchgehend nach unten, wobei ihre untere Oberfläche schräg in den zu temperierenden Raum steht.

Die Strahlplatten 5, 6 sind thermisch an die Rohre 3 gekoppelt, so dass ein Wärmetransportmedium, bspw. erwärmtes Wasser, die Wärme in die Strahlplatte abgibt und die Strahlplatte Strahlungsenergie ausstrahlt. Alternativ ist es möglich, das Wärmemedium als Kühlmedium zu nutzen, indem z.B. gekühltes Wasser durch die Rohre 3 geleitet wird. Oberhalb des Rohrregisters ist eine Wärmedämmung 7 angeordnet, die verhindert, dass die Wärme in und um das Rohrregister 4 nach oben entweicht. Der Strahlflächenaufbau besitzt seitlich Seitenwandelemente 8, die sich in Längsrichtung bzw. parallel zu den Rohren 3 in X-Richtung erstrecken. Gleichzeitig erstrecken sich die Seitenwandelemente von den äußeren Strahlplatten 6 im Wesentlichen vertikal nach oben (Z-Richtung).

Auf der den Strahlplatten 6 abgewandten Seite bilden die Seitenwandelemente 8 durch eine Umkantung 9 einen horizontal verlaufenden Abschnitt. Es besteht die Möglichkeit, diesen horizontal verlaufenden Abschnitt mit geeigneten Befestigungssystemen zum Anbringen des Strahlflächenaufbaus an einer Decke auszurüsten, so dass der Strahlflächenaufbau mit seiner Oberseite an einer Decke befestigt wird.

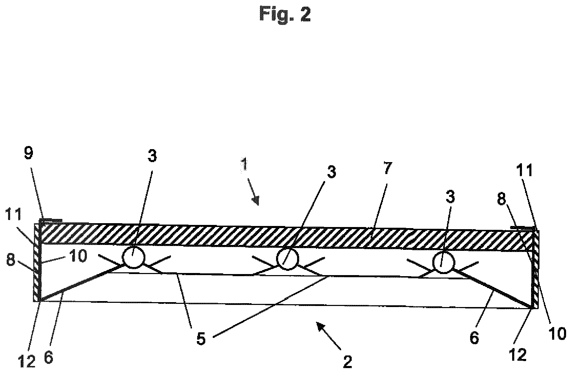

Die Figur 2 zeigt den Strahlflächenaufbau 1 in Einbaulage, wobei die Decke oberhalb des Strahlflächenaufbaus nicht dargestellt ist. Die Unterseite der Strahlplatten 5, 6 ist nach unten zu dem zu temperierenden Raum ausgerichtet. Die Seitenwandelemente 8 umfassen einen in Einbaulage sich vertikal nach oben erstreckenden Seitenwandabschnitt 10, der den Innenraum des Strahlflächenaufbaus seitlich abschließt. Die Rohre 3 sind dabei zwischen den Seiten-wandabschnitten 10 angeordnet. Auch die Wärmedämmung 7 ist zwischen den Seitenwandabschnitten 10 angeordnet, wodurch sie vor mechanischen Beschädigungen geschützt ist. Die seitlichen Strahlplatten 6 sind jeweils einstückig mit einem Seitenwandabschnitt 10 ausgebildet, so dass sich die Strahlplatten 6 vom Rohr 3, an dass die Strahlplatte 6 thermisch gekoppelt ist, seitlich bis zu einer unteren Kante des Seitenwandelements 8 erstreckt. Dort knickt das Seitenwandelement 8 nach oben ab und geht in den Seitenwandabschnitt 10 über. Aufgrund der Kopplung über die Strahlplatte 6 ist auch der Seitenwandabschnitt 10 thermisch an das Rohr 3 gekoppelt. Das bedeutet, dass die Wärme aus dem Rohr 3 auch in den Seitenwandabschnitt 10 geleitet wird. Um zu vermeiden, dass eine seitliche Konvektion auftritt, die nicht effizient genutzt werden kann, ist an der Seite der Seitenwandabschnitte 10, die den Rohren 3 abgewandt ist, eine Beschichtung 11 angebracht.

Die Beschichtung besteht aus einem thermisch isolierenden und einem schallisolierenden Material in Form einer Wärme- und Schalldämmung. Das Material Ist beispielsweise ein hochflexibler Schaumstoff auf Basis synthetischen Kautschuks. Durch das Anbringen dieser Beschichtung 11 an der Außenseite des Seitenwandabschnitts 10, wird der Schall, der insbesondere von außen auf den Seitenwandabschnitt 10 trifft, effizient absorbiert, so dass die Schallreflexionen vermindert werden. Gleichzeitig wird verhindert, dass seitliche Wärmeverluste auftreten, und es wird sichergestellt, dass die Wärme, bzw. Kälteenergie im Wesentlichen über die Strahlplatte 6 abgegeben wird. Obgleich die Kopplung des Seitenwandabschnitts 10 an das Rohr 3 erfolgt, erfolgt keine Abgabe dieser Wärme über den Seitenwand-abschnitt 10. Dies erweist sich als besonders vorteilhaft, da keine aufwendige Entkopplung der Strahlplatte 6 von dem Seitenwandabschnitt 10 erfolgen muss. Darüber hinaus bietet das Seitenwandelement 8 einen mechanischen Schutz für die Rohre 3 bzw. die Wärmedämmung 7.

Die Beschichtung 11 ist seitlich auf den senkrechten Seitenwandabschnitt 10 mittels nicht gezeigtem doppelseitigen Klebeband aufgeklebt und kann damit bei Bedarf auch wieder entfernt werden.

Der Übergang von Strahlplatte 6 zu Seitenwandabschnitt 10 findet an dem in Einbaulage tiefsten Punkt des Seitenwandelements 8 statt. Dadurch bildet das Seitenwandelement an der Seite des Strahlflächenaufbaus einen nach unten weisenden Staurand 12 auf, der ein seitliches Entweichen der temperierten Luft verhindert.

### Bezugszeichenliste

- 1: Strahlflächenaufbau
- 2: Deckenstrahlplatte
- 3: Rohr
- 4: Rohrregister
- 5: Strahlplatte
- 6: Strahlplatte
- 7: Wärmedämmung
- 8: Seitenwandelement
- 9: Umkantung
- 10: Seitenwandabschnitt
- 11: Beschichtung
- 12: Staurand

## Patentansprüche

1. Strahlflächenaufbau (1) zum Temperieren eines Raumes mit wenigstens einer Deckenstrahlplatte (2) mit einem oder mehreren von einem Wärmeübertragungsmedium und/oder Kälteübertragungsmedium durchströmten Rohren (3) eines Rohrregisters (4), mit wenigstens einer inneren Strahlplatte (5) und einer zu einem Staurand (12) hin gelegnenen Stahlplatte (6), die in Einbaulage dem zu temperierenden Raum zugewandt sind, mit einer sich in Einbaulage bis oberhalb des Rohrregisters (4) erstreckenden Wärmedämmung (7) und Seitenwandelementen (8), zwischen denen das Rohrregister (4) angeordnet ist und welche einen Innenraum seitlich abschließen, wobei wenigstens ein Seitenwandelement (8) in Einbaulage einen vertikal nach oben verlaufenden Seitenwandabschnitt (10) aufweist, welches einen durch eine Umkantung (9) horizontal verlaufenden und die Wärmedämmung (7) übergreifenden Abschnitt aufweist, **dadurch gekennzeichnet, dass**
- der Seitenwandabschnitt (10) des Seitenwandelements (8) zumindest abschnittsweise auf der dem Rohrregister (4) abgewandten Seite eine Beschichtung (11) aus thermisch isolierendem und schallabsorbierendem Material aufweist,
- die Beschichtung (11) zu der dem Rohrregister (4) abgewandten Seite hin freiliegt und auf den Seitenwandabschnitt (10) nachrüstbar und lösbar aufgeklebt ist, und
- das Seitenwandelement (8) einen zu einem Rohr (3) des Rohrregisters (4) hin verlaufenden Abschnitt aufweist, der als keine thermisch isolierende und schallabsorbierende Beschichtung aufweisende Strahlplatte (6) ausgebildet ist.

2. Strahlflächenaufbau (1) nach Anspruch 1, **dadurch gekennzeichnet, dass** das Seitenwandelement (8) thermisch an ein Rohr (3) des Rohrregisters (4) gekoppelt ist.

3. Strahlflächenaufbau (1) nach einem der vorhergehenden Ansprüche, **dadurch gekennzeichnet, dass** das Seitenwandelement (8) einstückig ausgebildet ist.

4. Strahlflächenaufbau (1) nach einem der vorhergehenden Ansprüche, **dadurch gekennzeichnet, dass** der Seitenwandabschnitt (10) einen Sichtschutz und/oder eine Halterung ausbildet.

5. Strahlflächenaufbau (1) nach einem der vorhergehenden Ansprüche, **dadurch gekennzeichnet, dass** die Beschichtung (11) ein flexibler Schaumstoff auf Basis synthetischen Kautschuks ist.

## Claims

1. Radiating surface structure (1) for controlling the temperature of a room, comprising at least one ceiling radiating panel (2) with one or more pipes (3) of a pipe register (4) through which a heat transfer medium and/or cold transfer medium flows, comprising at least one inner radiating panel (5) and a radiating panel (6) laid into a baffle (12), which in the installed position are facing the room of which the temperature is to be controlled, comprising a thermal insulation (7), which in the installed position extends to above the pipe register (4), and side-wall elements (8), between which the pipe register (4) is arranged and which laterally terminate an interior space, wherein at least one side-wall element (8) has in the installed position a vertically upwardly running side-wall portion (10), which has a portion that runs horizontally as a result of a bending (9) and extends over the heat insulation (7),
**characterized in that**
- the side-wall portion (10) of the side-wall element (8) has at least in certain portions on the side facing away from the pipe register (4) a coating (11) of thermally insulating and sound-absorbing material,
- the coating (11) is exposed on the side facing away from the pipe register (8) and can be retrofitted and adhesively attached releasably to the side-wall portion (10), and
- the side-wall element (8) has a portion that runs to a pipe (3) of the pipe register (4) and is formed as a radiating panel (6) that does not have a thermally insulating and sound-absorbing coating.

2. Radiating surface structure (1) according to Claim 1, **characterized in that** the side-wall element (8) is thermally coupled to a pipe (3) of the pipe register (4).

3. Radiating surface structure (1) according to one of the preceding claims, **characterized in that** the side-wall element (8) is formed in one piece.

4. Radiating surface structure (1) according to one of the preceding claims, **characterized in that** the side-wall portion (10) forms a visual screen and/or a mounting.

5. Radiating surface structure (1) according to one of the preceding claims, **characterized in that** the coating (11) is a flexible foam on the basis of synthetic rubber.

## Revendications

1. Ensemble (1) de surface radiante destiné à contrôler la température d'un local, l'ensemble présentant
au moins une plaque radiante de couverture (2) dotée d'un ou plusieurs tubes (3) d'un ensemble (4) de tubes traversés par un fluide de transfert de chaleur et/ou par un fluide de transfert de froid,
au moins une plaque radiante intérieure (5) et une plaque radiante (6) posée dans un bord de retenue (12),
les plaques radiantes étant tournées vers le local dont la température doit être contrôlée lorsqu'elles sont en position de montage,
une isolation thermique (7) qui s'étend en position montée jusqu'au-dessus de l'ensemble (4) de tubes et des éléments (8) de paroi latérale entre lesquels est disposé l'ensemble (4) de tubes et qui ferment latéralement un espace intérieur,
un ou plusieurs éléments (8) de paroi latérale présentant en position de montage une section (10) de paroi latérale qui s'étend verticalement vers le haut, qui présente une partie s'étendant horizontalement en formant un rabat (9) et qui chevauche l'isolation thermique (7),
**caractérisé en ce que**
au moins certaines parties de la section (10) de paroi latérale de l'élément (8) de paroi latérale présentent sur le côté non tourné vers l'ensemble (4) de tubes un revêtement (11) en un matériau thermiquement isolant et absorbant le bruit,
**en ce que** le revêtement (11) est exposé sur le côté non tourné vers l'ensemble (4) de tubes et peut être placé et/ou collé de manière libérable sur la section (10) de paroi latérale et
**en ce que** l'élément (8) de paroi latérale présente une section qui s'étend en direction d'un tube (3) de l'ensemble (4) de tubes et qui est configurée comme plaque radiante (6) ne présentant pas de revêtement thermiquement isolant et absorbant le bruit.

2. Ensemble (1) de surface radiante selon la revendication 1, **caractérisé en ce que** l'élément (8) de paroi latérale est relié thermiquement à un tube (3) du l'ensemble (4) de tubes.

3. Ensemble (1) de surface radiante selon l'une des revendications précédentes, **caractérisé en ce que** l'élément (8) de paroi latérale est formé d'une seule pièce.

4. Ensemble (1) de surface radiante selon l'une des revendications précédentes, **caractérisé en ce que** la section (10) de paroi latérale forme une protection contre la vue et/ou un support.

5. Ensemble (1) de surface radiante selon l'une des revendications précédentes, **caractérisé en ce que** le revêtement (11) est une mousse souple à base de caoutchouc synthétique.
